# DEMANDE DE BREVET EUROPEEN

(11) **EP 1 679 177 A1**
(43) Date de publication de la demande: **12.07.2006**
(21) Numéro de dépôt: 05290056.0
(22) Date de dépôt: 10.01.2005
(51) Int. Cl.: B29C 49/42, B65G 17/32, B65G 47/90

(54) **Tournette pince tuyère pour préformes et bouteilles en plastique**

(71) Demandeur: Desert, Philippe, 76280 Saint Jouin Bruneral (FR)
(72) Inventeur: Desert, Philippe, 76280 Saint Jouin Bruneral (FR)

(57) **Abrégé**

Dispositif pour clipser les préformes en plastique, les bouteilles plastiques ou tout autre objet cylindrique comportant une partie cylindrique pour le transporter.

L'invention concerne un dispositif permettant de transporter des dits objets d'un point à un autre en ayant une bonne prise sur le produit, le tout avec un effort de clipsage moindre. De plus la surface de contact interne du produit est réduite et occasionne donc une pollution moindre.

Il est constitué d'un support (1) qui sert de référence à la surface d'appui (2) adapté à la forme et au diamètre externe de la partie cylindrique (3) de l'objet à transporter.

L'ensemble du support (1) est traversé verticalement par l'axe (4) qui, libéré de toute contrainte, vient s'appliquer sur la partie interne de l'objet à transporter (3). Cet axe (4) est actionné par le bras du levier (7) qui permet de restituer la force du ressort (5) (ou du piston pneumatique, ou de l'électro-aimant...) à l'axe (4) et ainsi, clipser l'objet à transporter (3).

Le dispositif selon l'invention est particulièrement destiné au transport de préforme ou de bouteille en plastique. Ce dispositif selon l'invention peut permettre de les transporter dans le four où les préformes sont chauffées, entre le four et la roue souffleuse, sur la souffleuse en déportant le mécanisme et en évidant la partie centrale (8), en sortie de la roue souffleuse afin de transporter les bouteilles ou sur tout autre machine nécessitant le maintien d'une préforme, d'une bouteille plastique ou de tout autre objet comportant une partie cylindrique pour le transport, nécessitant ou pas de déporter le mécanisme poussant l'axe(4) afin de pouvoir laisser passer dans l'objet une partie mécanique ou un fluide.

## Description

La présente invention concerne un dispositif permettant de clipser les préformes en plastique, les bouteilles en plastique ou tout autre objet comportant une partie cylindrique permettant de le transporter d'un point à un autre.

Le transport des préformes dans le four est habituellement assuré par un clipsage sur la totalité de la surface intérieure ou extérieure du col de la préforme, ce qui oblige une force de clipsage et de déclipsage importante, impliquant des parties mécaniques conséquentes.

Le clipsage étant généralement assuré sur la partie intérieure de la préforme, on peut constater une contamination bactérienne et chimique sur la partie interne de la préforme servant de réceptacle au contenu de la future bouteille.

Le transport des préformes entre le four et la roue, entre la roue et les périphériques est effectué à l'aide de pinces qui viennent s'enserrer sur le pourtour du col, ce qui occasionne une rotation de la préforme, point gênant quand l'utilisation nécessite de la précision.

Le dispositif selon l'invention permet de remédier à tous ces inconvénients. II comporte en effet selon une première caractéristique, une surface d'appui ajustée au diamètre externe et la forme du col de la préforme, de la bouteille plastique ou de tout objet comportant une partie cylindrique permettant le transport. Cette surface d'appui permettra d'épauler le col du produit transporté en se servant de ses caractéristiques afin d'assurer une meilleure prise ou un anti-glissement.

Le dispositif peut également transporter la préforme, la bouteille plastique ou tout autre corps comportant une partie cylindrique permettant de le transporter sur la roue de soufflage ou tout autre machine nécessitant de laisser une partie mécanique ou un fluide passer dans l'objet transporté. Effectivement en déportant le mécanisme d'actionnement de l'axe(4), il est possible d'évider la partie intérieure (8) et ainsi laisser passer une partie mécanique ou un fluide.

L'axe mobile(4) vient, une fois le produit épaulé, s'appliquer sur la partie interne du col de la bouteille, de la préforme ou de l'objet comportant une partie cylindrique permettant le transport.

Cette pression appliquée à l'intérieur du col du produit permet parfaitement son maintien dans une position parallèle à la surface d'appui et ce avec une petite force de clipsage.

Selon les modes particuliers de réalisation :
- Le diamètre, la hauteur, la forme ainsi que la longueur de la surface d'appui peuvent être modifiés en fonction de l'objet à transporter et ainsi offrir une meilleure prise sur le dit objet voir de l'empêcher de glisser sur la surface d'appui.
- L'axe mobile(4) peut être indifféremment actionné par un ressort, un levier ou tout autre moyen de mouvement en fonction de l'environnement d'utilisation. (piston pneumatique, électro-aimant.....)
- L'axe mobile peut être légèrement en biais, rotatif ou parallèle à la surface d'appui selon les besoins.

Les dessins annexés illustrent l'invention :

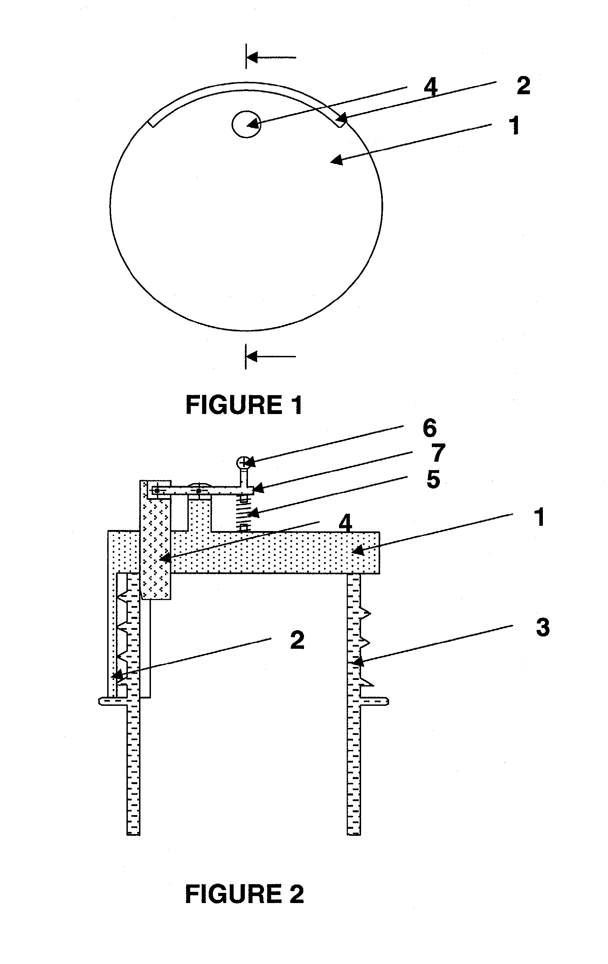

La figure 1 représente vue de dessus le dispositif de l'invention.
La figure 2 représente en coupe le dispositif de l'invention.

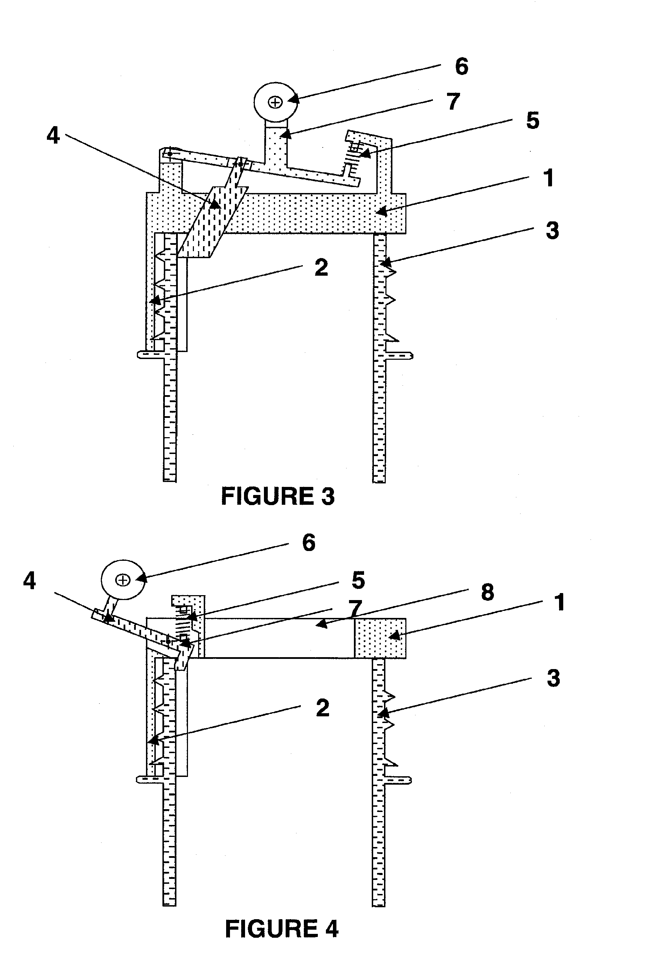

La figure 3 représente en coupe une variante du dispositif de l'invention.
La figure 4 représente en coupe une autre variante du dispositif de l'invention

En référence à ces dessins, le dispositif comporte un support (1) qui sert de référence à la surface d'appui (2) adapté à la forme et au diamètre externe de la partie cylindrique (3) de l'objet à transporter.

L'ensemble du support (1) est traversé verticalement par l'axe (4) qui, libéré de toute contrainte, vient s'appliquer sur la partie interne de l'objet à transporter (3).

Cet axe (4) est actionné par le bras du levier (7) qui permet de restituer la force du ressort (5) à l'axe (4) et ainsi, clipser l'objet à transporter (3).

La tenseur du ressort (5) peut être ajustée en fonction du poids et de la forme de l'objet à transporter (3). Le galet d'actionnement du mécanisme (6) est ramené à l'axe de l'ensemble afin de simplifier le mode de clipsage.

Le clipsage peut être de type normalement clipsé (à savoir, au repos sans contrainte mécanique, l'ensemble se présente de manière à ce que l'objet à transporter soit clipsé sur la réalisation - voir schémas 2 - ou normalement déclipsé, c'est à dire qu'au repos sans contrainte mécanique, l'ensemble se présente de manière à ce que l'objet à transporter soit déclipsé de la réalisation, non solidaire de l'ensemble, comme le démontrent les schémas 3 et 4).

L'axe (4) peut être de type translationnel vertical ou en biais (voir schéma 2 et 3) selon l'utilisation requise.

L'axe (4) peut être de type rotatif comme on peut le constater sur le schéma 4.

Aucun exemple limitatif ne peut être apporté à l'ensemble car les dimensions de l'ensemble seront directement en relation avec les dimensions de l'objet à transporter.

Le dispositif selon l'invention est particulièrement destiné au transport de préforme ou de bouteille en plastique. Ce dispositif selon l'invention peut permettre de les transporter dans le four où les préformes sont chauffées, entre le four et la roue souffleuse, sur la roue souffleuse, en sortie de la roue souffleuse afin de transporter les bouteilles ou sur toute autre machine nécessitant le maintien d'une préforme, d'une bouteille en plastique ou de tout autre objet comportant une partie cylindrique pour le transporter, nécessitant ou pas de déporter le mécanisme poussant l'axe(4) afin de laisser passer une partie mécanique ou un fluide dans l'objet transporté.

## Revendications

1. Dispositif pour clipser les préformes en plastique (3), les bouteilles en plastique (3) ou tout autre objet comportant une partie cylindrique creuse (3) permettant de les transporter ou de les maintenir pendant une opération. Le dit objet (3) appliqué sur la surface d'appui (2) est maintenu dans sa position à l'aide de l'axe (4). La force du ressort (5) est transmise à l'axe (4) par le levier (7).

2. Le dispositif selon la revendication 1 en ce que l'adaptation de la surface d'appui (2) peut être ajustée au diamètre externe et aux formes du col de la préforme (3), de la bouteille plastique (3) ou de tout objet comportant une partie cylindrique (3) permettant le transport afin d'assurer une meilleure prise ou un anti-glissement.

3. Dispositif selon la revendication 1 ou la revendication 2 **caractérisé en ce que** l'axe mobile (4) peut s'appliquer sur la partie interne du col de la bouteille (3), de la préforme (3) ou de l'objet comportant une partie cylindrique (3) permettant le transport indifféremment de manière verticale (schéma 2), de manière en biais (schéma 3) ou de manière rotative (schéma 4).

4. Dispositif selon l'une quelconque des revendications précédentes **caractérisé en ce que** le mécanisme d'actionnement de l'axe mobile (4) peut-être excentré du dispositif afin de libérer la partie centrale (8) pour le passage d'une partie mécanique (étirage, dépoussiérage, bec de remplissage....) ou d'un fluide( soufflage, dépoussiérage, liquide.....)

5. Dispositif selon l'une quelconque des revendications précédentes **caractérisé en ce que** la position repos de l'axe (4) peut indifféremment être sorti (schéma 2) ou rentré (schéma 3 et schéma 4) selon le choix de basculement retenu pour le levier (7).

6. Dispositif selon l'une quelconque des revendications précédentes **caractérisé en ce que** le galet d'actionnement (6) peut être ramené à l'axe support (1), en n'importe quel autre point sur le levier (7) ou excentré afin de libérer la partie centrale.
